# EUROPEAN PATENT SPECIFICATION

(11) **EP 0 841 831 B1**
(45) Date of publication and mention of the grant of the patent: **09.02.2011**
(21) Application number: 97308011.2
(22) Date of filing: 10.10.1997
(51) Int. Cl.: H04Q 11/04, H04L 12/66, H04L 29/06, H04L 12/64

(54) **Wan-based voice gateway**
Auf "WAN" basierter Netzübertragungseinrichtung für Sprache
Passerelle de voix pour réseau "WAN"

(30) Priority: 07.11.1996 US 743784
(43) Date of publication of application: 13.05.1998
(73) Proprietor: AT&T Corp., New York, NY 10013-2412 (US)
(72) Inventor: Civanlar, Seyhan, Red Bank, New Jersey 07701 (US); Coffield, Don Richard, Locust, New Jersey 07760 (US); Leighton, William J., III, Scotch Plains, New Jersey 07076 (US); Mansell, James J., Fair Haven, New Jersey 07704 (US); Saksena, Vikram R., Freehold, New Jersey 07728 (US)
(74) Representative: Suckling, Andrew Michael

(56) References cited:
- US-A- 5 351 237
- US-A- 5 483 527
- US-A- 5 521 914
- US-A- 5 604 737
- SUTHERLAND S L ET AL: "B-ISDN INTERWORKING" IEEE COMMUNICATIONS MAGAZINE, vol. 31, no. 8, 1 August 1993, pages 60-63, XP000393763
- TAO J ET AL: "INTERNET ACCESS VIA BASEBAND AND BROADBAND ISDN GATEWAYS" PROCEEDINGS OF THE ANNUAL INTERNATIONAL PHOENIX CONFERENCE ON COMPUTERS AND COMMUNICATIONS, PHOENIX, APR. 12 - 15, 1994, no. CONF. 13, 12 April 1994, pages 485-490, XP000462600 INSTITUTE OF ELECTRICAL AND ELECTRONICS ENGINEERS
- CROWCROFT J ET AL: "MULTIMEDIA TELECONFERENCING OVER INTERNATIONAL PACKET SWITCHED NETWORKS. RN/90/XX" COMMUNICATIONS FOR DISTRIBUTED APPLICATIONS AND SYSTEMS, CHAPEL HILL, APR. 18 - 19, 1991, no. CONF. 4, 18 April 1991, pages 23-33, XP000278436 INSTITUTE OF ELECTRICAL AND ELECTRONICS ENGINEERS
- MORTENSEN R: "DPBX-LAN INTERNETWORKING" DIGITAL COMMUNICATIONS, SASKATOON, MAY 11 - 12, 1988, no. CONF. 2, 11 May 1988, pages 6-9, XP000619546 INSTITUTE OF ELECTRICAL AND ELECTRONICS ENGINEERS

## Description

### Technical Field

This invention relates generally to an apparatus for establishing communications paths over a circuit switched network, a connectionless packet switched network, and a connection-oriented packet switched network, and more particularly to an apparatus for establishing point-to-point or point-to-multipoint audio or video communication over a telephony network, the Internet, and an Asynchronous Transfer Mode (ATM) or a Frame Relay (FR) network.

### Background of the Invention

Voice traffic transmitted between two or more users over a telephony network is carried over circuit-switched paths that are established between the users. Circuit-switched technology is well-suited for delay-sensitive, real-time applications such as voice transmission since a dedicated path is established. In a circuit-switched network, all the bandwidth of the established path is allocated to the voice traffic for the duration of the call.

In contrast to the telephony network, the Internet is an example of a connectionless packet-switched network that is based on the Internet Protocol (IP). While the majority of the traffic carried over the telephony network is voice traffic, the Internet is more suitable to delay-insensitive applications such as the transmission of data. The Internet community has been exploring improvements in IP so that voice can be carried over IP packets without significant performance degradation. For example, the resource reservation protocol known as RSVP (see RSVP Version 2 Functional Specifications, R. Braden, L.Zhang, D. Estrin, Internet Draft, <draft-ietf-rsvp-spec-06, 1996) provides a technique for reserving resources (i.e. bandwidth) for the transmission of unicast and multicast data with good scaling and robustness properties. The reserved bandwidth is used to effectively simulate the dedicated bandwidth scheme of circuit-switched networks to transmit delay-sensitive traffic. If RSVP is implemented only for those communications having special Quality of Service (QoS) needs such as minimal delay, the transmission of other communications such as non-real time data packets may be provided to other users of the Internet in the usual best-effort, packet-switched manner.

The majority of Internet users currently access the Internet via slow-speed dial/modem lines using protocols such as SLIP (serial line IP) and PPP (Point to Point Protocol), which run over serial telephone lines (modem and N-ISDN) and carry IP packets. Voice signals are packetized by an audio codec on the user's multimedia PC. The voice packets carry substantial packetization overhead including the headers of PPP, IP, UDP, and RTP, which can be as big as 40 octets. Transmitting voice packets over low speed access lines is almost impossible because of the size of the header relative to the size of a typical voice packet (20-160 octets, based on the average acceptable voice delay and amount of voice compression). However, several proposals have emerged to compress the voice packet headers so that greater transmission efficiency and latency can be achieved for voice-packets transmitted over low-speed, dial access lines.

A substantial number of users are expected to begin sending voice traffic over the Internet with acceptable voice quality and latency because of the availability of RSVP and packet-header compression technologies. The transmission terminals for sending packetized voice over the Internet are likely to be multimedia personal computers.

In addition to the telephony network and the Internet, other transmission standards such as Frame-Relay and ATM have been emerging as alternative transport technologies for integrated voice and data. ATM/FR networks are similar to the telephony network in that they both employ connection-oriented technology. However, unlike the telephony network, ATM/FR networks employ packet switching. In contrast to the Internet Protocol, which is a network layer protocol (layer three), FR and ATM pertain to the data link layer (layer two) of the seven-layer OSI model.

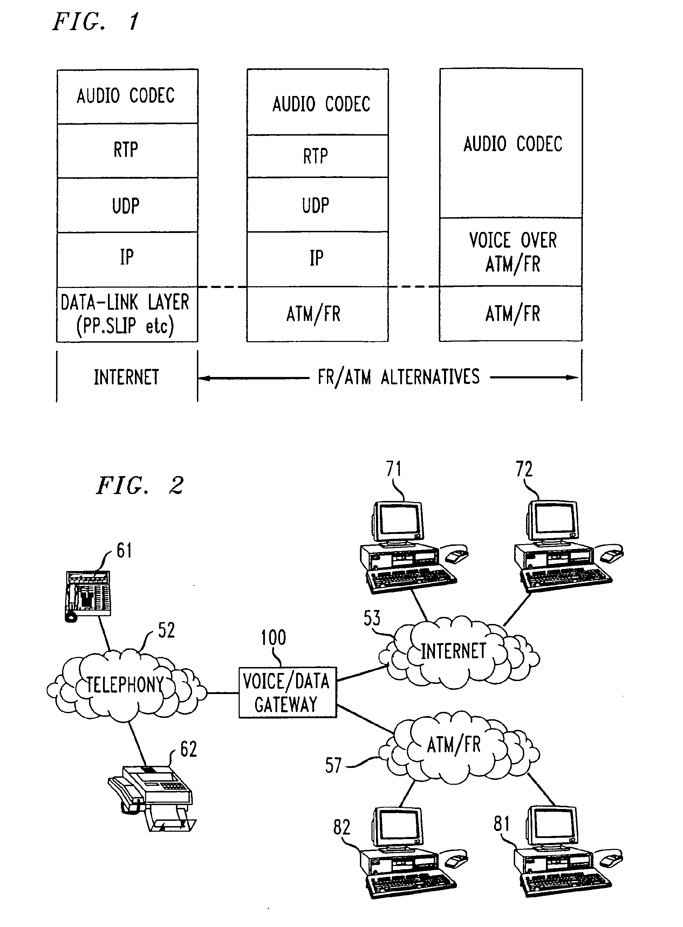

Frame Relay and ATM can transport voice in two different formats within the FR (or ATM) packets (cells). In the first format, the FR (ATM) packets (cells) carry an IP packet (or some other layer 3 packet), which in turn encapsulates the voice packets. Alternatively, the FR (ATM) packets (cells) directly encapsulate the voice packet, i.e., without using IP encapsulation. The first alternative employs protocols such as LAN Emulation (LANE). Classical IP Over ATM. and Multiprotocol Over ATM (MPOA), all of which are well known in the prior art. The second alternative is referred to as "Voice over FR" and "Voice over ATM", respectively. Note that the first alternative, which includes IP encapsulation, allows voice packets to be routed between IP routers. That is, layer three processing is performed by the routers along the voice path to determine the next hop router. The second alternative is a purely FR/ATM switched solution. In other words, switching can be performed only at the data link layer. FIG. 1 depicts the protocol stacks for transport of voice over IP and the two alternatives for voice over FR/ATM.

The audio codec depicted in FIG. 1 enables voice encoding/decoding, including voice digitization, compression, silence elimination and formatting. The audio codec is defined by ITU-T standards such as G.711 (PCM of Voice Frequencies), G.722 (7 Khz Audio-Coding within 64 Kbps), G.723 (Dual Rate Speech Code for Multimedia Telecommunications Transmitting at 6.4 and 5.3 Kbps), and G.728 (Speech Encoding at 16 Kbps).

The "Voice over ATM/FR layer" depicted in FIG. 1 is referred to as the multimedia multiplex and synchronization layer, an example of which is defined in ITU-T standard H.222. ITU-T is currently defining the H.323 standard, which specifies point-to-point and multipoint audio-visual communications between terminals (such as PCs) attached to LANs. This standard defines the components of an H.323 system including H.323 terminals, gate-keepers, and multi-point control units (MCUs). PCs in communication with the Internet can use the H.323 standards to communicate with each other on the same LAN or across routed data networks. In addition to H.323, the ITU-T is in the process of defining similar audio-visual component standards for B-ISDN (ATM) in the H.310 standard , and for N-ISDN in the H.320 standard. The previously mentioned standards also define call signaling formats. For example, IP networks use Q.931 call controls over a new ITU-T standard known as H.225 (for H.323 terminals). Telephony networks use Q.931 signaling and ATM networks use Q.2931 signaling.

Many standards bodies are in the process of defining how voice (and video) can be transported within a given homogenous network such as the telephony, IP, FR and ATM networks. However, there is currently no arrangement for transmitting voice over a heterogeneous network that consists of two or more such networks employing different transmission standards.

JP-A-7 170 288 discloses a voice communication system, which is connected to a local area network (LAN) to which communication terminals are connected and to a public network to which telephones are connected, and which is provided with a communication server between the LAN and the public network having different protocols from each other. The communication server enables a voice communication between a telephone on the public network and a communication terminal connected to the LAN by performing processing similar to that for a voice communication between two communication terminals connected to the LAN. The communication server determines whether an address of the other party inputted by a user is a communication terminal address or a telephone number, and transmits a voice communication request to a communication terminal of the other party when the address is a communication terminal address. When the address is a telephone number, the user acquires the communication terminal address of the communication server, and transmits a voice communication request to the communication server. Thereafter, the voice communication processing is performed through the communication server.

"Multimedia Teleconferencing over International Packet Switched Networks" by J Crowcroft et al, XP 000278436, discloses a multimedia teleconferencing system over international packet switched networks. A CODEC runs a standard bit stream encoding of video, and this is packetized by a PC, which then connects to an ST (stream protocol) gateway. The ST gateway runs two further protocols, to carry video and voice, each of which is tuned to the special requirements of video and voice.

### Summary of the-Invention

In accordance with the principles of the invention, the foregoing problem can be addressed by employing a WAN-based Voice Gateway which connects to the telephony network, the Internet and the ATM/FR network. Given that network users will be in communication with a variety of such heterogeneous networks, gateway capabilities will be needed between them to support end-point stations in a voice session which are connected to one or more of these different networks. The telephony network, Internet and FR/ATM Networks all use different schemes for establishing a voice session (i.e., call set-up protocols), and different formats for controlling a session and transporting voice. The gateway of the present invention provides conversion of the transmission format, control, call signaling and audio stream (and potentially video and data streams) between different transmission standards. The capabilities of the gateway may also include audio coding translation (e.g., between G.722 and G.728) and address translation between different address types (e.g., a telephone number and an IP address).

In some embodiments of the invention the voice gateway 100 performs the following functions: call-signaling protocol conversion (e.g., between Q.931, Q.2931, H.225); audio mixing/bridging or generation of composite audio and switching; address registration; address translation (e.g., IP <-> E.164 <-> NSAP<-> email); audio format conversion (e.g., from G.711 to G.728); session management/control (e.g. manage number of end points in a call); interfacing with other gateways (e.g. WAN-to-WAN or WAN-to-local); interfacing with the SS7 signaling network; and interfacing with the Internet signaling network.

In one embodiment of the invention, an apparatus is provided for establishing a communication session between first and second terminals in communication over a plurality of networks that employ differing transmission standards. The communication session may be an audio session, a video session or a multimedia session. The plurality of networks are selected from among a circuit switched network (e.g., a telephony network), a connectionless packet switched network (e.g., the Internet) and a connection-oriented packet switched network (e.g., an ATM or frame relay network). The apparatus includes a call set-up translator for translating among call set-up protocols associated with the circuit switched network, the connectionless packet switched network and the connection-oriented packet switched network. An encoding format translator is provided for translating among encoding protocols associated with the circuit switched network, the connectionless packet switched network and the connection-oriented packet switched network. Also provided is an address database for storing a plurality of addresses in different formats for each registered terminal, which includes the first and second terminals. The apparatus also includes a session manager for storing control information relating to the first and second terminals. The control information includes an identification of the first and second terminals that participate in the communication session, and information defining a format in which data are to be received by at least one of the first and second terminals.

### Brief Description of the Drawing

In the drawings:
FIG. 1 shows a simplified protocol stack for transporting voice over an IP network, a telephony network (e.g., an ISDN network) and an ATM/FR network.
FIG. 2 shows a voice gateway in accordance with the present invention situated among a telephony network, an IP network and a AM/FR network.
FIG. 3 shows a plurality of voice gateways interfacing with one another and with user terminals.
FIG. 4 shows a simplified diagram of a voice gateway interconnected with various networks.
FIG. 5 is a block diagram showing the functionality of various interfaces of which the voice gateway is comprised.
FIG. 6 shows a flow chart of an exemplary method for processing calls through the voice gateway in accordance with the present invention.
FIG. 7 is a block diagram of one embodiment of the voice gateway shown in FIGS. 2-4.

### Detailed Description

FIG. 2 shows a voice gateway 100 in accordance with the present invention. As shown, the gateway 100 communicates with networks employing differing transmission standards such as telephony network 52, ATM/FR network 57 and Internet 53. The gateway 100 is connected to a switch, router or server, and an ATM/FR switch, which are located in the telephony network 52, the Internet 53. and the ATM/FR network 57, respectively. The gateway 100 facilitates voice communication between a variety of end-point stations connected to the individual networks. Such stations may include telephone 61, fax machine/telephone 62, and PC 63 (which are connected to the telephony network 52), PCs 71 and 72 (which are connected to the Internet 53) and workstations 81 and 82 (which are connected to the ATM/FR network 57). Voice gateway 100 will be deployed in a distributed fashion. That is, various gateways can be interconnected and used in a tandem manner to complete calls.

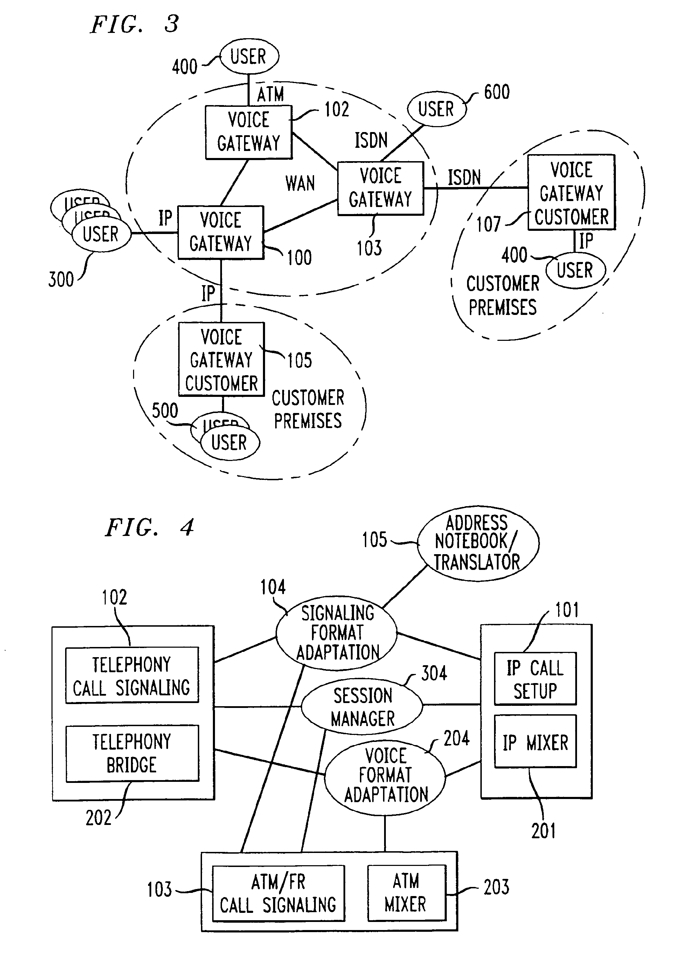

The voice gateway 100 includes an interface to each of the networks 52, 53, and 57. These interfaces, depicted in functional form in FIG. 4, will be described below in additional detail. In general, the interfaces serve to convert and manage call signaling among the different networks and to mix voice calls received from within a given network.

As shown in FIG. 3, voice gateway 100 may also be in direct communication with other voice gateways 102 and 103 in the WAN and local voice gateways 105 and 107 attached to the customer's LAN, local ATM/FR networks, or voice terminals. A WAN voice gateway serves as a "master" gateway with respect to local gateways directly attached thereto. In this configuration the local gateways serve as so-called "slaves." When two WAN voice gateways such as gateways 100 and 102 are in direct communication they may act as "peers" with respect to one another while each one also functions as a "master" to the local gateway to which its in direct communication. In an alternative configuration, the WAN voice gateways in direct communication with one another may be arranged in a hierarchical manner in such a way that each WAN voice gateway is connected to another WAN voice gateway that serves as its "master" gateway. A "peer" configuration solution is generally more suitable when the WAN voice gateways are arranged in a mesh-connected topology while the "master" (hierarchical) configuration is generally more suitable for a tree-connected topology. FIG. 3 depicts a mesh-connected topology in which each WAN voice gateway 100, 102, and 103 is a peer of its neighboring WAN gateways.

As seen in FIG. 4, an IP call set-up interface 101 is provided for receiving and terminating call-setup requests from the Internet and for generating call-set up requests to the Internet to establish connections between two or more Internet stations, telephony stations, frame relay stations, and/or ATM stations. Interface 101 sends and receives call setup requests in the form of IP packets using signaling protocols such as Q.931 (or a sub-set of Q.931 as defined in H.323) or another signaling protocol that may be developed particularly for transmitting voice over IP. The IP call set-up interface 101 receives call-setup requests from the telephony call set-up interface 102 (discussed below) in the form of DTMF, Q.931 or other signaling standards. The interface 101 also receives call-setup requests from the ATM/FR call set-up interface 103 (discussed below) if the call-setup request is in the form of Q.2931. A signaling format translator 104 is provided to translate the call-setup requests into a form that the interface 101 can properly understand. The translation is performed before the requests are forwarded to the IP call set-up interface 101. The interface 101 monitors the status of each call establishment session and transmits error messages, as appropriate, in the form of audio messages or digital data to each IP station participating in the session.

The gateway 100 also includes a telephony call set-up interface 102 for receiving call-setup requests from the telephony network 52 or sending call-setup requests to the telephony network 52 to establish connections between two or more Internet stations, telephony stations, frame relay stations and/or ATM stations. Telephony set-up interface 102 receives and sends call setup messages in accordance with Q.931 or with other telephony signaling protocols. The interface 102 also generates SS7 signaling messages to a Network Control Point (NCP) to obtain, for example, a telephone number translation prior to generating an outgoing Q.931 signaling message to the telephony network 52. Additionally, telephony call set-up interface 102 receives call-setup requests from the IP call set-up interface 101 and the ATM/FR call set-up interface 103 (discussed below) if the call-setup request originates in one these networks. The signaling format translator 104 translates the call-set up into a form that is understood by the telephony call set-up interface 102.

Similar to the interfaces 101 and 102 discussed above, an ATM/FR call set-up interface 103 is provided for receiving call-setup requests from the ATM/FR network 57 and for transmitting call-set up requests to the ATM/FR network 57 to establish connections between two or more Internet stations, telephony stations, FR stations, and/or ATM stations. ATM/FR call set-up interface 103 sends and receives call setup requests in the form of packets employing FR/ATM signaling protocols. The ATM/FR call set-up interface 103 also receives call-setup requests from the telephony call set-up interface 102, and the IP call set-up interface 101 if the call-setup request originates in the telephony or IP networks, respectively. The signaling format translator 104 translates these requests into a form of that is understood by the ATM/FR call set-up interface 103.

The gateway 100 further includes an IP packet mixer 201. The IP packet mixer 201 receives voice in the form of IP packet streams from one or more IP stations (including voice terminals or other voice gateways) and processes each incoming stream (e.g., by multiplexing the various voice streams onto a single IP packet stream). The IP mixer 201 also performs appropriate voice encoding translation into a format compatible with the voice decoding capabilities of each receiving station as identified by the session manager 304. The IP mixer 201 subsequently transmits the IP packets to the other IP stations participating in the session. If there are stations participating in the communication session which are not IP stations, (as identified by the session manager 304), the IP packet mixer 201 sends those packets received from the stations to the format translator 204, which then de-encapsulates and converts the IP packets into a format appropriate for the telephony bridge 202 and/or ATM/FR mixer 203.

In some embodiments of the invention, the IP packet mixer 201 also provides control functionality that would otherwise be performed by the IP call set-up interface 101. In particular, the IP packet mixer 201 performs such control functions when in-band signaling is employed. If out-of-band signaling is employed, the control functions may conveniently reside in the IP call set-up interface 101. In the former situation the IP packet mixer receives control packets over an IP connection such as a dedicated UDP or TCP socket interface, for example. The control packets identify the control information pertaining to the station from which it receives the packet, such as the type of voice encoding that is employed by the station, bandwidth utilization, and QoS requirements. Of course, if no control information is provided, previously defined default control parameters may be used. The IP packet mixer 201 is also used by an IP station to terminate its participation in a session. The session control information received by the IP packet mixer 201 is forwarded to the session manager 304 to maintain a current database of station requirements.

The telephony bridge 202 is the mirror image of the IP packet mixer 201. The bridge 202 bridges (mixes and switches) voice calls received from a plurality of telephony network stations during a voice session. If there are stations participating in the session which are not telephony stations, the bridge 202 sends the digital voice signals it receives from the telephony stations to the voice format interface 204 (discussed below), which performs echo cancellation, voice encoding, encryption and packetization before the digitized voice is sent to the IP mixer 201 and/or the ATM/FR mixer 203 for subsequent forwarding. Telephony bridge 202 also receives calls from voice terminals and other voice gateways.

The ATM/FR mixer 203 is also the mirror image of the IP packet mixer 201. The mixer 203, which bridges voice calls received from a plurality of ATM/FR stations during a voice session, can mix a plurality of different voice streams onto ATM/FR cells/packets. If there are stations participating in the session which are not ATM/FR stations, the mixer sends the ATM/FR voice packets it receives from the ATM/FR stations to the voice format interface 204, which performs any appropriate de-encapsulation, protocol conversion, packetization, etc., before the digitized voice is sent to the IP packet mixer 201 and/or the telephony bridge 202 for subsequent forwarding.

The signaling format translator 104 is employed by the gateway 100 to convert and adapt among telephony signaling (Q.931), SS7 signaling, IP call signaling, and FR/ATM signaling protocols. For example, the interface 104 receives signaling messages from the call set-up interface 101 and parses the message, performs appropriate address translation using the address translator 105, and translates the signaling format to another signaling format before sending it to the appropriate outgoing call signaling interface.

The voice format interface is provided to convert and adapt among the various telephony, IP, FR and ATM voice formats, including voice encoding changes, echo cancellation, re-synchronization and packetization.

An address translator 105 is also which allows various stations to register using email address, IP address, E.164 address, MAC address and/or ATM NSAP. address formats. The interface can also translate addresses from one address format to another. When multiple gateways are employed, each "master" gateway may collect the address registrations stored in its "slave" gateways. The interface also maintains a list defining the correspondence between the station addresses directly connected to the voice gateway 100.

A session manager interface 304 is employed to receive control information from the mixers, bridges and call set-up interfaces which pertains to the capabilities and status of those stations participating in the communication session. The interface 304 assists the IP mixer 201, telephony bridge 202 and FR/ATM mixer 203 in forwarding voice traffic to all participating stations.

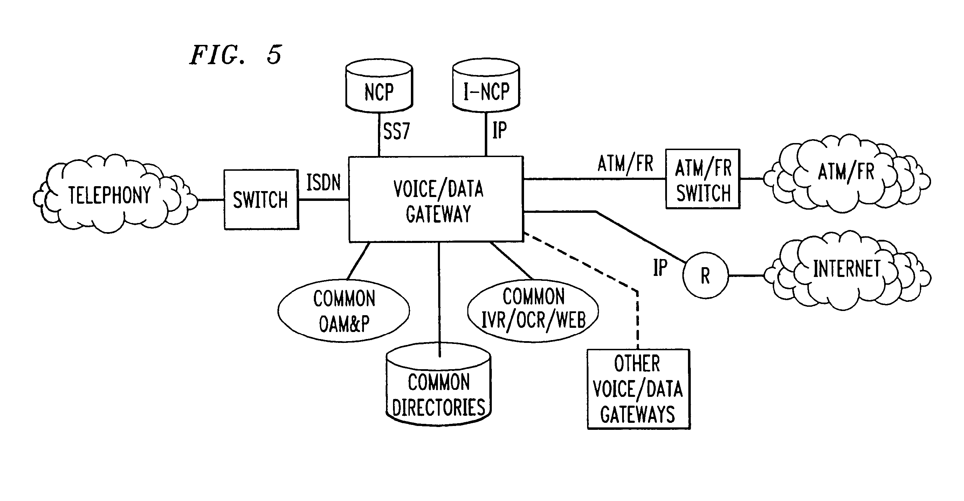

As illustrated in FIG. 5 the voice gateway 100 also connects to various common Operations Administration Management and Provisioning (OAM&P) functions, databases/directories (e.g., authentication databases such as for credit card authorization), and signaling network intelligence that reside within the SS7 signaling network such as a network control point (NCP) and an Internet NCP residing within the Internet. For example, an NCP may be used by the telephony call set-up interface 102 to translate an 800 number into a telephone number. Similarly, an Internet NCP may be used by the IP call set-up interface 101 to request a translation of a station's email address, host name, or URL to an IP. The Internet NCPs provide intelligent services, such as discussed in U.S. Application Serial No. 08/618,483.

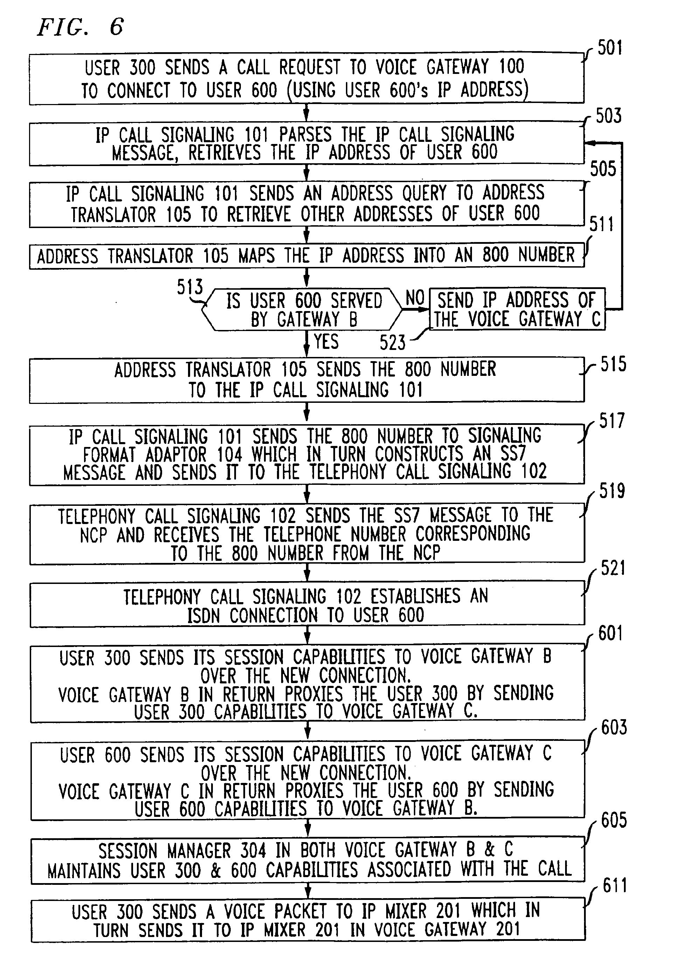

FIG. 6 shows a flow chart of an exemplary method for establishing a voice session between the user stations 300 and 600 of FIG. 3 in accordance with the principles of this invention. As seen in FIG. 3, station 300 is provided with direct connectivity to the Internet via voice gateway B. Station 600 communicates with the voice gateway C via an N-ISDN interface. In FIG. 3, the voice gateways A, B and C are all "peers" and any local gateways attached thereto serve as "slaves."

The method begins at step 501 when station 300 sends a call signaling request over the Internet to voice gateway B in the form of an IP packet. The IP packet carries signaling information (e.g., in the form of a Q.931 message), including the IP address of the called station 600. In step 503, the IP call set-up interface 101 parses the IP packet and retrieves the IP address of station 600. In step 505, the IP call set-up interface 101 sends an address query to the address translator 105 to retrieve other addresses for station 600. In step 511, the address translator 105 maps the IP address of station 600 to a toll-free 800 number. Thereafter, at the conditional branch point 513, address translator 105 determines if the 800 number of station 600 is served by voice gateway B.

If the result in step 513 is no, indicating that voice gateway C serves station 600, the method continues with step 523 in which the address translator 105 returns to gateway B to retrieve the IP address of Voice Gateway C for contacting station 600. This step implies that the call to station 600 should be forwarded to voice gateway C, which is the "master" gateway responsible for serving station 600. Thereafter, in step 503, the IP call set-up 101 interface of Voice Gateway B routes the call to the IP call set-up interface 101 of Voice Gateway C for further processing. The method then continues as described below.

If the result in step 513 is YES, indicating that voice gateway B serves the 800 number of station 600, the address translator interface 105 sends the 800 number to the IP call set-up interface 101 of gateway B in step 515. In step 517, the IP set-up interface 101 of gateway B sends the 800 number to the signaling format interface 104, which in turn constructs an SS7 message and forwards it to the telephony call set-up interface 102. In step 519, the interface 102 sends the SS7 message to the NCP in the signaling network to translate the 800 number into a telephone number. The NCP provides the requested telephone number to the telephony call set-up interface 102. Once the proper telephone number is determined, interface 102 sends a Q.931 message to station 600 in step 521 to establish the call.

Once the station 600 is connected, across the Telephony Bridge 202 and IP Mixer 201, a control plane connection is first established between the Users 300 and 600 in step 601 (note that this connection traverses both Voice Gateway C and Voice Gateway B). This connection is employed by both stations in step 603 to indicate their respective audio encoding preferences, say G.711 for station 300 and G.723 for station 600. Note that voice gateway B needs to know the encoding preferences of station 300 while voice gateway C needs to know the encoding preferences of station 600. Additionally, note that the format translation between station 300 and station 600 on the connection plane occurs in voice gateway C (given that communication from voice gateway C to voice gateway B uses IP as the network layer protocol). Once the station capabilities and preferences are known to each voice gateway in step 605, the session managers 304 in both gateways B and C store a conference table that includes the preferences of both users. Communication proceeds between stations 300 and 600 in step 611 when station 300 sends a voice packet to the IP mixer 201 in gateway B, which in turn sends the packet to the IP mixer 201 in voice gateway C.

The method described above in connection with FIG. 6 may be implemented in a similar manner if station 600 is an ISDN terminal that employs voice over ISDN without implementing the Internet protocol.

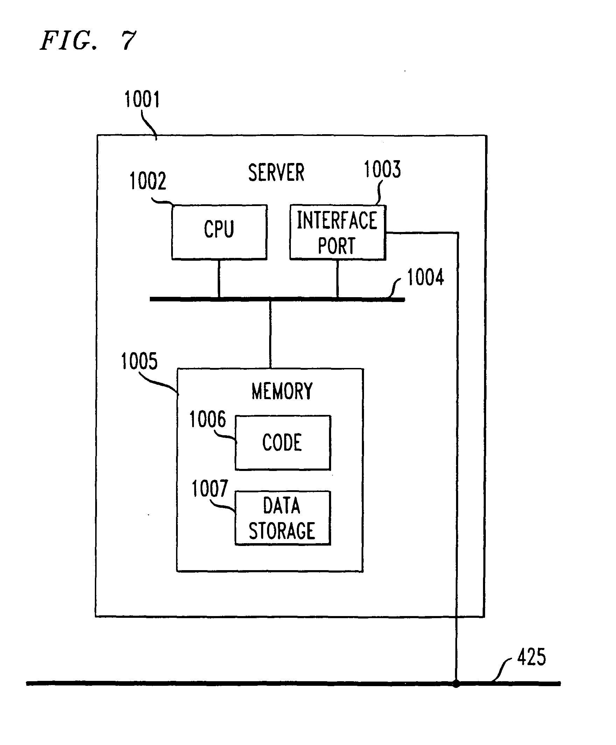

FIG. 7 is a block diagram of an exemplary embodiment of WAN-based voice gateway 1001 which includes a) central processing unit (CPU) 1002, b) interface port 1003 c) data bus 1004 and d) memory 1005. Central processing unit (CPU) 1002 provides the computational capability necessary to control the processes of voice gateway 1001. Data bus 1004 provides for the exchange of data between the components of voice gateway 1001. Interface port 1003 provides for the exchange of data between voice gateway 1001 and devices external to Voice Gateway 1001 via link high speed backbone 425. To this end, interface port 1003 contains, for example, well-known data transceivers. Memory 1005 includes 1) code portion 1006, which contains the instructions (program) used by CPU 1002 to control the processes of Voice Gateway 1001, such as those described herein above, and data storage portion 1007, which contains the information necessary to the voice gateway to perform its specific function, such as, address registration and translation.

The foregoing embodiments merely illustrates the principles of the invention. The scope of the invention is not defined by these embodiments, but by the appended claims.

## Claims

1. An apparatus (100) adapted for establishing a communication session between first and second terminals(61,71,72,81,82) in communication over a plurality of networks (52, 53, 57) employing differing transmission standards, said plurality of networks being selected from among a circuit switched network, a connectionless packet switched network and a connection-oriented packet switched network, the apparatus comprising:
a call set-up translator (104) adapted for translating among call set-up protocols associated with said circuit switched network, said connectionless packet switched network and said connection-oriented packet switched network;
an encoding format translator (204) adapted for translating among encoding protocols associated with said circuit switched network, said connectionless packet switched network and said connection-oriented packet switched network;
an address database (105) adapted for storing a plurality of addresses in different formats for each registered terminal including at least said first and second terminals; and
a session manager (304) adapted for storing control information relating to the first and second terminals, said control information including an identification of the first and
second terminals participating in the communication session and further **characterized by** including information defining a format in which data are to be received by at least one of the first and second terminals.

2. An apparatus as claimed in claim 1 wherein said circuit-switched network is a 25 telephony network.

3. An apparatus as claimed in claim 1 wherein said connectionless packet switched network is the Internet.

4. An apparatus as claimed in claim 1 wherein said connection-oriented packet switched network is an ATM network.

5. An apparatus as claimed in claim 1 wherein said connection-oriented packet switched network is a Frame-Relay network.

6. An apparatus as claimed in claim 1 wherein said communication session is established among at least three terminals and further comprising an aggregator adapted for bridging a plurality of communications received from a plurality of the terminals and adapted for transmitting said plurality of communications to remaining ones of said at least three terminals.

7. An apparatus as claimed in claim 1 wherein said communication session is an audio session.

8. An apparatus as claimed in claim 1 wherein said communication session 15 includes video information.

9. An apparatus as claimed in claim 1 wherein said communication session is a multimedia session including audio and video information.

10. An apparatus as claimed in claim 1 wherein said encoding format translator (204) is an audio format translator.

11. An apparatus as claimed in claim 1 wherein said encoding format translator (204) is a video format translator.

12. An apparatus as claimed in claim 1 wherein said encoding format translator (204) is a multimedia format translator.

13. An apparatus as claimed in claim 1 wherein said control information further includes quality of service requirements.

14. An apparatus as claimed in claim 1 wherein said data format is alterable during the communication session.

15. An apparatus as claimed in claim 1 wherein said call set-up translator (104) translates among a plurality of standards, including H.225, Q.931, Q.2931, and SS7 signaling standards.

## Patentansprüche

1. Vorrichtung (100), angepasst zum Aufbauen einer Kommunikationssitzung zwischen ersten und zweiten Endgeräten (61, 71, 72, 81, 82) in Kommunikation über eine Vielzahl von Netzen (52, 53, 57), die verschiedene Übertragungsstandards benutzen, wobei die Vielzahl von Netzen aus Folgenden ausgewählt wird: einem leitungsvermittelten Netz, einem verbindungslosen paketvermittelten Netz und einem verbindungsorientierten paketvermittelten Netz, wobei die Vorrichtung umfasst:
einen Verbindungsaufbau-Übersetzer (104), angepasst zum Übersetzen zwischen Verbindungsaufbauprotokollen, die mit dem leitungsvermittelten Netz, dem verbindungslosen paketvermittelten Netz und dem verbindungsorientierten paketvermittelten Netz assoziiert sind;
einen Codierformatübersetzer (204), angepasst zum Übersetzen zwischen Codierprotokollen, die mit dem leitungsvermittelten Netz, dem verbindungslosen paketvermittelten Netz und dem verbindungsorientierten paketvermittelten Netz assoziiert sind;
eine Adressdatenbank (105), angepasst zum Speichern einer Vielzahl von Adressen in verschiedenen Formaten für jedes registrierte Endgerät, mindestens die ersten und zweiten Endgeräte enthaltend; und
einen Sitzungsmanager (304), angepasst zum Speichern von Steuerinformation, die die ersten und zweiten Endgeräte betrifft, wobei die Steuerinformation eine Identifikation der ersten und zweiten Endgeräte enthält, die an der Kommunikationssitzung teilnehmen, und außerdem **dadurch gekennzeichnet ist, dass** sie Information enthält, die ein Format definiert, in dem Daten von mindestens einem der ersten und zweiten Endgeräte zu empfangen sind.

2. Vorrichtung nach Anspruch 1, worin das leitungsvermittelte Netz ein Fernsprechnetz ist.

3. Vorrichtung nach Anspruch 1, worin das verbindungslose paketvermittelte Netz das Internet ist.

4. Vorrichtung nach Anspruch 1, worin das verbindungsorientierte paketvermittelte Netz ein ATM-Netz ist.

5. Vorrichtung nach Anspruch 1, worin das verbindungsorientierte paketvermittelte Netz ein Frame-Relay-Netz ist.

6. Vorrichtung nach Anspruch 1, worin die Kommunikationssitzung zwischen mindestens drei Endgeräten aufgebaut wird und außerdem einen Aggregator umfasst, der zum Bridging einer Vielzahl von Kommunikationen angepasst ist, die von einer Vielzahl von Endgeräten empfangen werden, und zum Übertragen der Vielzahl von Kommunikationen an restliche der mindestens drei Endgeräte angepasst ist.

7. Vorrichtung nach Anspruch 1, worin die Kommunikationssitzung eine Audio-Sitzung ist.

8. Vorrichtung nach Anspruch 1, worin die Kommunikationssitzung Video-Information enthält.

9. Vorrichtung nach Anspruch 1, worin die Kommunikationssitzung eine Multimedia-Sitzung ist, die Audio- und Video-Information enthält.

10. Vorrichtung nach Anspruch 1, worin der Codierformatübersetzer (204) ein Audio-Formatübersetzer ist.

11. Vorrichtung nach Anspruch 1, worin der Codierformatübersetzer (204) ein Video-Formatübersetzer ist.

12. Vorrichtung nach Anspruch 1, worin der Codierformatübersetzer (204) ein Multimedia-Formatübersetzer ist.

13. Vorrichtung nach Anspruch 1, worin die Steuerinformation außerdem Dienstgüteanforderungen enthält.

14. Vorrichtung nach Anspruch 1, worin das Datenformat während der Kommunikationssitzung veränderbar ist.

15. Vorrichtung nach Anspruch 1, worin der Verbindungsaufbau-Übersetzer (104) zwischen einer Vielzahl von Standards übersetzt, H.225-, Q.931-, Q.2931- und SS7-Signalisierungsstandards eingeschlossen.

## Revendications

1. Dispositif (100) apte à établir une session de communication entre des premier et second terminaux (61, 71, 72, 81, 82) en communication sur une pluralité de réseaux (52, 53, 57) employant différentes normes de transmission, ladite pluralité de réseaux étant choisie parmi un réseau à commutation par circuits, un réseau à commutation par paquets sans fil et un réseau à commutation par paquets orienté connexion, le dispositif comprenant :
un traducteur d'établissement d'appel (104) apte à traduire parmi les protocoles d'établissement d'appel associés audit réseau à commutation par circuits, audit réseau à commutation par paquets sans fil et audit réseau à commutation par paquets orienté connexion ;
un traducteur de formats de codage (204) apte à traduire parmi les protocoles de codage associés audit réseau à commutation par circuits, audit réseau à commutation par paquets sans fil et audit réseau à commutation par paquets orienté connexion ;
une base de données d'adresses (105) apte à stocker une pluralité d'adresses dans différents formats pour chaque terminal enregistré, notamment au moins lesdits premier et second terminaux ; et
un gestionnaire de session (304) apte à stocker des informations de commande connexes aux premier et second terminaux, lesdites informations de commande comportant une identification des premier et second terminaux participant à la session de communication, et **caractérisé en ce qu'**il comporte en outre des informations définissant un format dans lequel les données doivent être reçues par au moins l'un des premier et second terminaux.

2. Dispositif selon la revendication 1, dans lequel ledit réseau à commutation de circuits est un réseau de téléphonie.

3. Dispositif selon la revendication 1, dans lequel ledit réseau à commutation par paquets sans fil est Internet.

4. Dispositif selon la revendication 1, dans lequel ledit réseau à commutation par paquets orienté connexion est un réseau ATM.

5. Dispositif selon la revendication 1, dans lequel ledit réseau à commutation par paquets orienté connexion est un réseau de relais de trames.

6. Dispositif selon la revendication 1, dans lequel ladite session de communication est établie entre au moins trois terminaux, et comprenant en outre un aggrégateur apte à mettre en parallèle une pluralité de communications reçues à partir d'une pluralité de terminaux, et apte à transmettre ladite pluralité de communications aux terminaux restants desdits au moins trois terminaux.

7. Dispositif selon la revendication 1, dans lequel ladite session de communication est une session audio.

8. Dispositif selon la revendication 1, dans lequel ladite session de communication comprend des informations vidéo.

9. Dispositif selon la revendication 1, dans lequel ladite session de communication est une session multimédia comportant des informations audio et vidéo.

10. Dispositif selon la revendication 1, dans lequel ledit traducteur de formats de codage (204) est un traducteur de formats audio.

11. Dispositif selon la revendication 1, dans lequel ledit traducteur de formats de codage (204) est un traducteur de formats vidéo.

12. Dispositif selon la revendication 1, dans lequel ledit traducteur de formats de codage (204) est un traducteur de format multimédia.

13. Dispositif selon la revendication 1, dans lequel lesdites informations de commande comportent en outre des exigences de qualité de service.

14. Dispositif selon la revendication 1, dans lequel ledit format de données est modifiable au cours de la session de communication.

15. Dispositif selon la revendication 1, dans lequel ledit traducteur d'établissement d'appel (104) traduit parmi une pluralité de normes, notamment les normes de signalisation H.225, Q.931, Q.2931 et SS7.
